Europäisches Patentamt

European Patent Office

Office européen des brevets

(11) Veröffentlichungsnummer: **0 448 783 A1**

# (12) EUROPÄISCHE PATENTANMELDUNG

(21) Anmeldenummer: 90122248.9

(22) Anmeldetag: 22.11.90

(51) Int. Cl.⁵: **B60R 11/00**, H05K 5/00

(30) Priorität: 23.03.90 DE 4009321

(43) Veröffentlichungstag der Anmeldung:
02.10.91 Patentblatt 91/40

(84) Benannte Vertragsstaaten:
**DE FR GB IT NL SE**

(71) Anmelder: **Dr.Ing.h.c. F. Porsche Aktiengesellschaft Porschestrasse 42 W-7000 Stuttgart 40(DE)**

(72) Erfinder: **Bach, Gerhard Quellenstrasse 34 W-7250 Leonberg-Gebersheim(DE)**

(54) **Steuergerät.**

(57) Dieses z.B. in einem Kraftfahrzeug verwendbare Steuergerät, mit dem die Elektronik einer Brennkraftmaschine, Antiblockiereinrichtung einer Bremsanlage oder dergleichen beeinflußbar sind, ist in einem Schaumstoffkörper stoßgedämpft gelagert. Der Schaumstoffkörper ist leicht lösbar am Bodenblech des Kraftfahrzeuges befestigt.

EP 0 448 783 A1

Die Erfindung betrifft ein Steuergerät nach dem Oberbegriff des Patentanspruchs 1.

Steuergeräte in Kraftfahrzeugen sind z.B. unter Vermittlung von Schrauben fest an einer Aufbauwandung angebracht. Dieser Ausführung haftet der Nachteil an, daß diese Steuergeräte weder gegen Schwingungs- noch Feuchtigkeitseinflüsse geschützt sind.

Aufgabe der Erfindung ist es daher, Steuergeräte z.B. für Kraftfahrzeuge so anzuordnen, daß sie durch Schwingungen und Stöße sowie Feuchtigkeit - gegebenenfalls auch andere Einflüsse - nicht beeinträchtigt werden.

Erfindungsgemäß wird diese Aufgabe durch die kennzeichnenden Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß das Steuergerät, das in den leicht herstellbaren Schaumstoffkörper eingesetzt ist, gut gegen Stöße und Schwingungen, auch Feuchtigkeit, geschützt ist. Dabei ist nicht nur die Montage des Steuergeräts im Schaumstoffkörper sondern auch die des Schaumstoffkörpers selbst im Kraftfahrzeug einfach.

In der Zeichnung ist ein Ausführungsbeispiel der Erfindung gezeigt, das nachstehend näher beschrieben ist.

Es zeigt

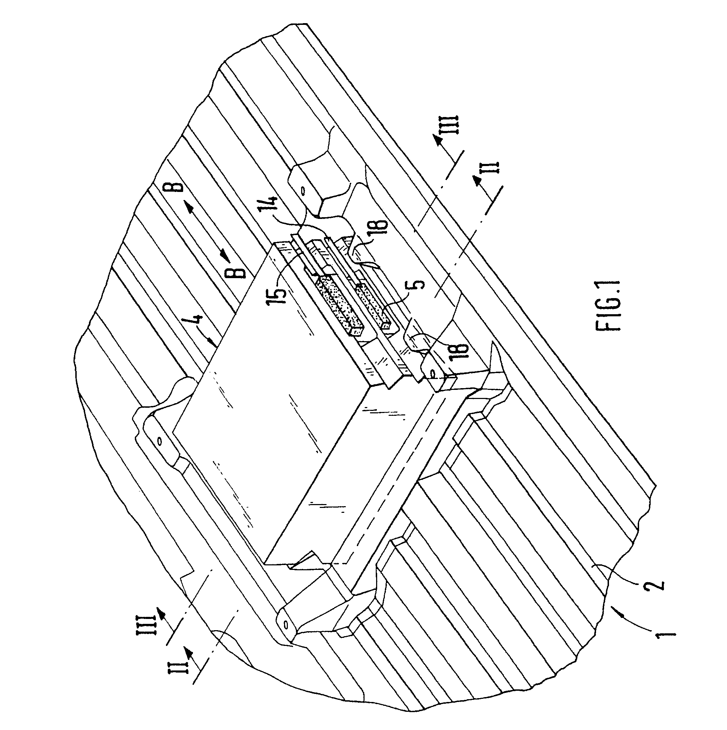

Fig. 1     eine Teilschrägansicht eines Kraftfahrzeug-Bodenblechs mit mehreren Steuergeräten,

Fig. 2     einen Schnitt nach der Linie II-II der Fig. 1,

Fig. 3     einen Schnitt nach der Linie III-III der Fig. 1,

Fig. 4     eine Ansicht in Pfeilrichtung A der Fig. 3.

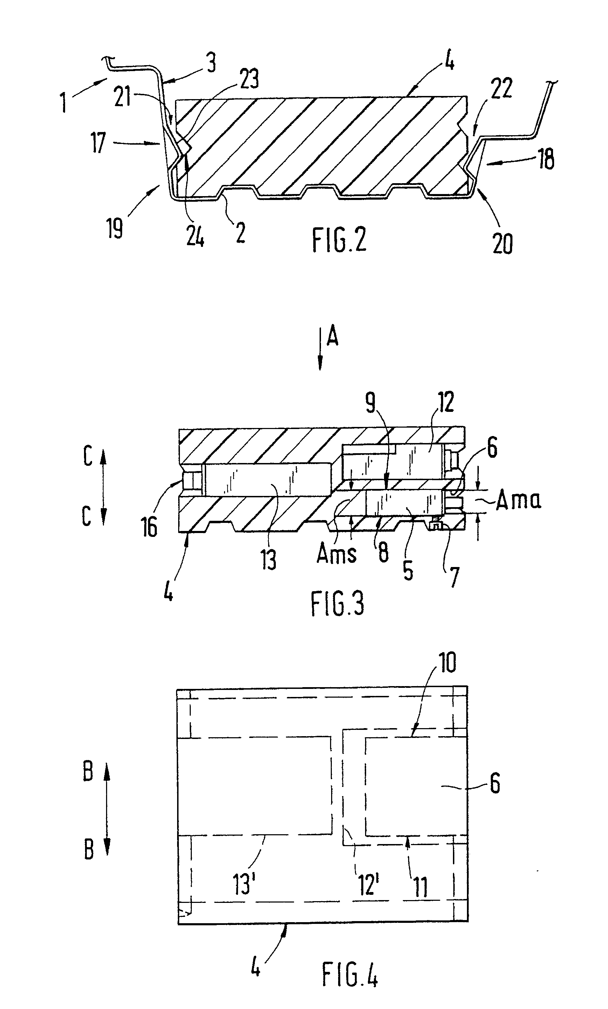

Ein Bodenblech 1 eines nicht näher dargestellten Kraftfahrzeugs weist mehrere in Fahrzeuglängsrichtung B-B verlaufende Sicken 2 und eine im Querschnitt U-förmige Aufnahme 3 (Fig. 2) auf, die unterhalb eines Sitzes (nicht gezeigt) angeordnet ist. In die Aufnahme 3 eingesetzt ist ein aus Kunststoff bestehender, stoßdämpfende Eigenschaften aufweisender Schaumstoffkörper 4, der zur Lagerung eines Steuergeräts 5 dient; mit letzterem kann die Elektronik einer Brennkraftmaschine, einer Antiblockiereinrichtung oder dergleichen beeinflußt werden. Der Schaumstoffkörper 4 hat beispielsweise die Form eines Prismas - ein Kubus ist auch denkbar - und weist eine Ausnehmung 6 auf, in die das prisma- oder quaderartige Steuergerät 5 eingesetzt ist. In der Ausnehmung 6 wird das Steuergerät 5 entweder formschlüssig mit einer Schraube 7 oder kraftschlüssig gehalten. Letzteres wird dadurch bewerkstelligt, daß das Abstandsmaß Ama der Ausnehmung 6 geringfügig kleiner ist als das Abstandsmaß Ams des Steuergerätes 5. Die Abstandsmaße Ama und Ams sind jedoch so gestaltet, daß das Steuergerät 5 produktionsgerecht in die Ausnehmung 6 einschiebbar ist. Außerdem besitzt die Ausnehmung 6 Wandungen 8, 9 und 10, 11, die das Steuergerät in senkrechter Richtung C-C und in Fahrzeuglängsrichtung B-B stoßdämpfend abstützen.

Im Ausführungsbeispiel sind in den Schaumstoffkörper 4 noch weitere Steuergeräte 12, 13 eingesetzt, und zwar auf die gleiche Weise wie das Steuergerät 5, d.h., auch sie sind in entsprechenden Ausnehmungen 12', 13' des Schaumstoffkörpers 4 eingebettet angeordnet. Mit den Steuergeräten 5, 12 und 13 verbunden sind Anschlußkabel 14, 15, 16, deren Verlegung im Fahrzeug nach den Regeln der Technik erfolgt.

Der Schaumstoffkörper 4, der am Boden 1 aufliegt, korrespondierende Ausnehmungen für die Sicken 2 besitzt (Fig. 2) und komplett bestückt in die Aufnahme 3 eingesetzt werden kann, wird mit Schnellverschlüssen 17, 18 gehalten. Die Schnellverschlüsse 17, 18, die an gegenüberliegenden Seiten 19, 20 des Schaumstoffkörpers 4 angebracht sind, sind sogenannte Schnappverschlüsse 21, 22, wobei jeder Schnappverschluß z.B. 21 einen nasenartigen Abschnitt 23 - es ist eine Eindrückung 23 in der Aufnahme 3 - umfaßt, der in eine Rinne 24 des Schaumstoffkörpers 4 eingreift. Dabei erzeugt der Abschnitt 23 in Verbindung mit der Rinne 24 eine den Schaumstoffkörper 4 gegen das Bodenblech 1 spannende Kraft.

Es besteht aber auch die Möglichkeit, den Schaumstofflörper mit lösbaren Befestigungsmitteln, wie z.B. Schrauben, lagemäßig festzulegen.

**Patentansprüche**

1.  Steuergerät elektrisch/elektronischer Bauart, das beispielsweise in einem Kraftfahrzeug angeordnet ist, **dadurch gekennzeichnet, daß** zur Lagerung des Steuergerätes (5) ein separater Schaumstoffkörper (4) dient, der das Steuergerät (5) zumindest teilweise umgibt und lösbar in das Kraftfahrzeug eingesetzt ist.

2.  Steuergerät nach Anspruch 1, **dadurch gekennzeichnet, daß** es form- und/oder kraftschlüssig im Schaumstoffkörper (4) gehalten ist.

3.  Steuergerät nach Anspruch 2, **dadurch gekennzeichnet, daß** der Schaumstoffkörper (4) eine Ausnehmung (6) aufweist, in die das beispielsweise quader- oder prismaförmige Steuergerät (5) eingesetzt ist.

4.  Steuergerät nach Anspruch 3, **dadurch ge-**

kennzeichnet, daß es in die Ausnehmung (6) einschiebbar ist.

5. Steuergerät nach Anspruch 3 oder 4, **dadurch gekennzeichnet,** daß die Ausnehmung (6) Wandungen (8, 9 und 10, 11) umfaßt, die das Steuergerät (5) in senkrechter Richtung (C-C) und in Fahrzeuglängsrichtung (B-B) in Lage hält.

6. Steuergerät nach einem oder mehreren der vorangehenden Ansprüche, **dadurch gekennzeichnet,** daß der Schaumstoffkörper (4) mehrere Ausnehmungen (12', 13') zur Aufnahme von weiteren gleichen oder unterschiedlichen Steuergeräten (12, 13) aufweist.

7. Steuergerät nach Anspruch 1, **dadurch gekennzeichnet,** daß der Schaumstoffkörper (4) mit Schnellverschlüssen (17, 18) in Lage gehalten ist.

8. Steuergerät nach Anspruch 7, **dadurch gekennzeichnet,** daß die Schnellverschlüsse (17, 18) Schnappverschlüsse (21, 22) sind.

9. Steuergerät nach Anspruch 8, **dadurch gekennzeichnet,** daß jeder Schnappverschluß (21) einen nasenartigen Abschnitt (23) umfaßt, der in eine Rinne (24) des Schaumstoffkörpers (4) eingreift.

10. Steuergerät nach einem oder mehreren der vorangehenden Ansprüche, **dadurch gekennzeichnet,** daß der Schaumstoffkörper (4) am Bodenblech (1) des Kraftfahrzeuges z.B. in einer im Querschnitt U-förmigen Aufnahme (3) unterhalb eines Sitzes angeordnet ist.

FIG.1

FIG.2

FIG.3

FIG.4

Europäisches
Patentamt

**EUROPÄISCHER
RECHERCHENBERICHT**

Nummer der Anmeldung

**EP 90 12 2248**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 514 440  (BOSCH)<br>* Seite 3, Zeilen 1 - 13 * * Figuren 1, 2 *<br>– – – | 1-6 | B 60 R 11/00<br>H 05 K 5/00 |
| Y | DE-A-3 303 508  (ZIEGENHAGEN KLAUS U. A.)<br>* das ganze Dokument *<br>– – – | 1-6 | |
| A | US-A-4 847 733  (ROY U. A.)<br>* Spalte 1, Zeilen 56 - 60 * * Spalte 3, Zeilen 7 - 52 @ Figuren 1, 3, 5 *<br>– – – | 1,7,8 | |
| A | DE-A-3 724 620  (TRW UNITED-CARR)<br>* das ganze Dokument *<br>– – – – – | 1-5 | |
| | | | **RECHERCHIERTE SACHGEBIETE (Int. Cl.5)**<br><br>B 60 R<br>H 05 K |

Der vorliegende Recherchenbericht wurde für alle Patentansprüche erstellt

| Recherchenort | Abschlußdatum der Recherche | Prüfer |
|---|---|---|
| Den Haag | 02 Juli 91 | CLASEN M.P. |